# FASCICULE DE BREVET EUROPEEN

(11) **EP 1 591 686 B1**
(45) Date de publication et mention de la délivrance du brevet: **13.08.2008**
(21) Numéro de dépôt: 05006782.6
(22) Date de dépôt: 29.03.2005
(51) Int. Cl.: F16D 55/00, F16D 65/00, F16D 66/00

(54) **Systeme de montage de plaquettes de freins a disques et freins a disque comportant un tel systeme**
Montagesystem für Scheibenbremsbeläge und mit einem solchen System ausgestattete Scheibenbremse.
Mounting system for disc brake pads and disc brake using such a system.

(30) Priorité: 29.04.2004 FR 0404614
(43) Date de publication de la demande: 02.11.2005
(73) Titulaire: ROBERT BOSCH GMBH, 70442 Stuttgart (DE)
(72) Inventeur: Lelievre, Bruno, 92320 Chatillon (FR); Oudin, Nicolas, 77186 Noisiel (FR); Boisseau, Jean-Pierre, 75014 Paris (FR)
(74) Mandataire: Hurwic, Aleksander Wiktor

(56) Documents cités:
- DE-A- 4 101 599
- US-A- 4 124 105
- US-A- 4 498 559
- US-A- 5 687 817

## Description

L'invention concerne un système de montage de plaquettes de freins à disques et un freins à disque comportant un tel système.

Les freins à disques comporte de manière connue dans la technique un disque associé à chaque essieu d'un véhicule et solidaire en rotation de cet essieu. Des plaquettes de freins quasiment immobiles en rotation viennent, lors d'une commande de freinage enserrer le disque pour le freiner ou l'immobiliser. Dans ce fonctionnement, les plaquettes de freins sont mobiles selon une direction perpendiculaire au plan du disque. Pour cela, chaque support de plaquette de frein possède des extrémités latérales telles que des "oreilles" qui servent à guider la plaquette de frein dans une chape selon la direction perpendiculaire au plan du disque.

De manière connue, comme cela est décrit, par exemple, dans la publication FR-A-2 800 140 de la demande de brevet français. FR9914024, les extrémités de chaque support de plaquette de frein sont placées dans des ressorts de guidage qui sont montés dans des rainures de la chape. Ces ressorts maintiennent radialement et tangentiellement la plaquette de manière amortie en raison de l'élasticité des ressorts ce qui permet d'amortir les vibrations. Mais le montage doit laisser au support de plaquette de frein une liberté de mouvement dans la direction perpendiculaire au plan du disque pour lui permettre de venir en contact avec le disque en cas de commande de freinage ou pour lui permettre de s'en écarter lorsque la commande freinage cesse.

Un tel système nécessite deux systèmes de ressorts de guidage aux extrémités du support de plaquette de frein en plus d'une plaque amortisssant les vibrations.

L'invention a pour but de réduire le nombre de pièces de montage des plaquettes de freins à disques et de réduire le temps de montage de ces plaquettes.

L'invention concerne donc un système de montage de supports de plaquettes de freins à disques pour supports de plaquettes comportant des extrémités de guidage sur deux extrémités latérales. Ce système comporte une plaque dont une dimension entre deux extrémités situées selon une direction est sensiblement équivalente à la distance séparant les deux extrémités latérales d'un support de plaquette. Ladite plaque est munie à chacune de ses extrémités d'au moins un premier ressort, ces ressorts étant prévus à la fois pour enserrer les extrémités de guidage d'un support de plaquette et pour être enserrés dans un logement de maintien d'un système de freinage.

Ledit premier ressort comporte au moins une lamé recourbée en forme de "U" dont une première branche est plus courte que la deuxième branche. Une extrémité de la première branche du "U" est raccordée à une extrémité de la plaque. Une face intérieure de la deuxième branche du "U" est tournée vers la plaque et l'extrémité de cette face intérieure est destinée à être en contact avec un flanc d'une extrémité de guidage d'un support de plaquette. Une face extérieure de la deuxième branche du "U" est tournée du côté opposé à la plaque et est destinée à être en contact avec une pièce support.

La' deuxième branche du "U" est avantageusement incurvée, la face convexe étant la face intérieure de cette deuxième branche du "U".

On peut également prévoir que l'extrémité de la deuxième branche comporte une languette tournée vers la plaque.

Dans le cas où on considère que l'invention est destinée à un support de plaquette de frein dont les extrémités de guidage comportent trois flancs, on peut prévoir que chaque extrémité de la plaque comporte un deuxième et un troisième ressorts similaires au premier ressort et dont les extrémités des faces intérieures des deuxièmes branches des "U" sont destinées à être en contact chacune avec un flanc d'une extrémité de guidage.

Avantageusement, la plaque comporte un trou permettant de fixer la plaque au support de plaquette de frein.

Avantageusement, la face opposée à la face destinée à être en contact avec le support de plaquette de frein est revêtue d' une couche d'un matériau amortisseur. Il peut également être prévu une couche de graisse entre ladite plaque et le support de plaquette de frein.

L'invention est également applicable à un ensemble de montage de support de plaquette de frein appliquant le système de montage précédent. Le support de plaquette de frein comporte deux extrémités de guidage situées à deux de ces extrémités latérales opposées, et ces extrémités de guidage sont enserrées par lesdits ressorts.

L'invention est également applicable à un frein à disques dans lequel une pièce support comporte deux ouvertures dont la distance qui les sépare correspond sensiblement à la dimension de la plaque mesurée entre ses deux extrémités. Les deux extrémités de la plaque sont placées dans ces ouvertures avec la face extérieures de la deuxième branche de chaque lame en forme de "U" en contact avec les flancs d'un des logements.

Avantageusement, les surfaces de chaque support de plaquette en contact avec une lame en forme de "U" sont revêtues d'une couche d'un matériau présentant un faible coefficient de frottement.

Selon une variante de l'invention, l'une des lames ressorts à une forme de U plus allongée que les autres lames ressorts et ladite languette possède une hauteur h par rapport au support de plaquette de frein telle qu'elle soit destinée à entrer en contact avec le disque de freinage lorsque la plaquette de frein atteint un taux d'usure déterminé.

Les différents aspects et caractéristiques de l'invention apparaîtront plus clairement dans la description qui va suivre et dans les figures annexées qui représentent
- la figure 1, un exemple de réalisation du système de l'invention,
- les figures 2a et 2b, des vues détaillées de profil d'une lame ressort en forme de "U"
- les figures 3a et 3b, une vue détaillée en coupe d'une plaque selon l'invention avec le support de plaquette de frein monté sur cette plaque,
- les figures 4a à 4c, des vues détaillées en perspectives d'une extrémité d'une plaque support selon l'invention.
- les figures 5a et 5b, une variante de réalisation du dispositif de l'invention prévoyant qu'un ressort au moins possède une branche ressort plus allongée pour tenir lieu d'amplificateur sonore et servir de dispositif témoin d'usure des plaquettes de freins,
- les figures 6a et 6b, un exemple de montage de frein à disque selon l'invention.

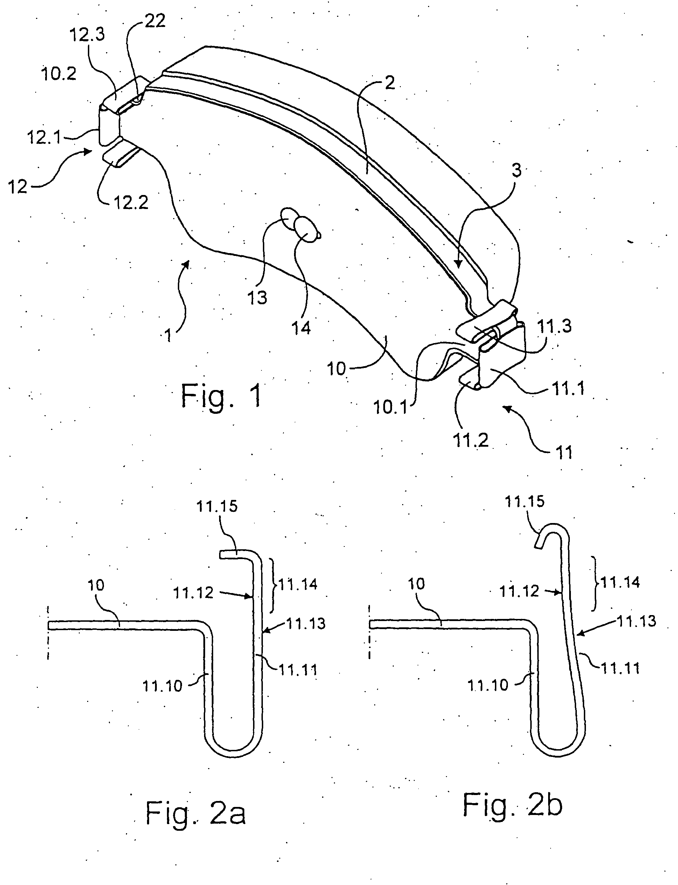

En se reportant à la figure 1, on va donc tout d'abord décrire de façon générale un exemple de réalisation du système de l'invention.

Un dispositif de montage 1 ayant une forme sensiblement équivalente à celle d'un support de plaquette de frein est terminé à deux extrémités par des systèmes à ressorts 11 et 12. A la partie centrale, une plaque 10 forme la partie plane du dispositif de montage. Cette plaque est accolée au support de plaquette de frein et sert d'amortisseur de bruit entre le support de plaquette de frein et un organe transmettant les efforts de freinage, par exemple le piston du frein (non représenté).

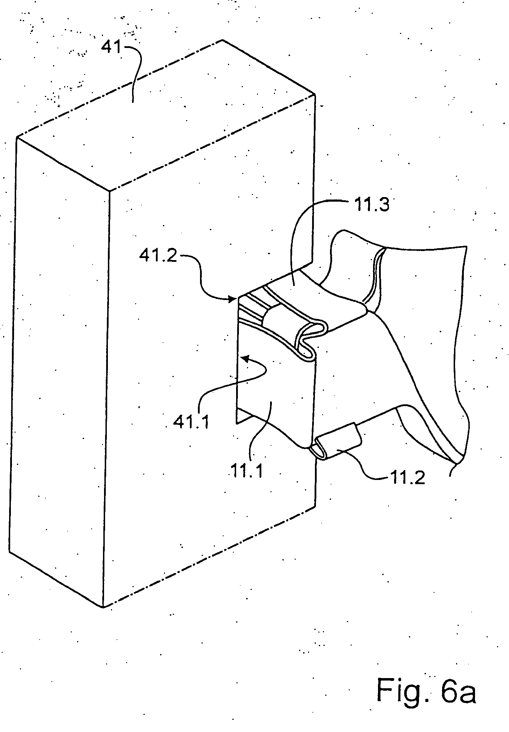

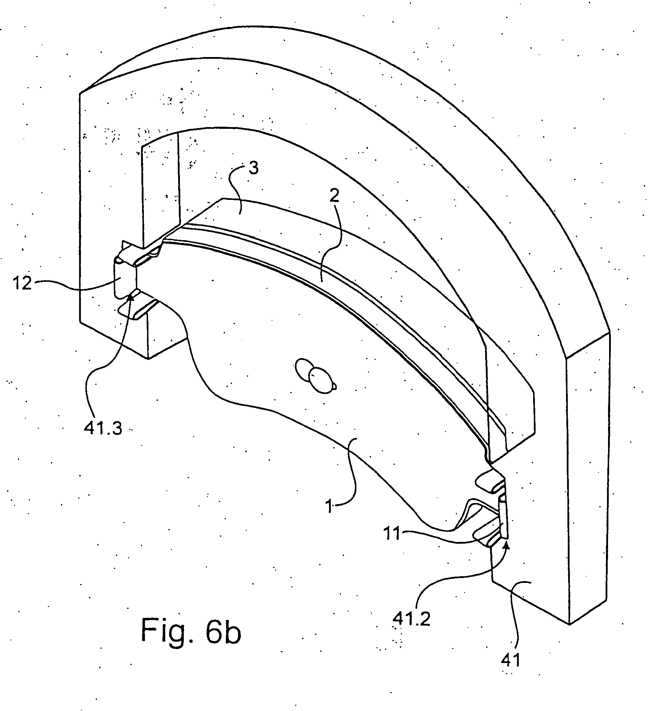

Le support de plaquette de frein 2 comporte des extrémités de guidage 21 et 22, par exemple en forme d'oreilles, qui présentent chacune des flancs extérieurs comme cela est connu dans la technique. Les systèmes de ressorts 11 et 12 épousent sensiblement la forme des contours de ces oreilles. Ainsi selon l'exemple de réalisation de la figure 1, une oreille comporte trois flancs et pour chaque flanc, le système de ressorts d'extrémité possède une lame ressort en contact avec ce flanc. Chaque oreille est donc logée dans un système de trois lames ressorts. Les flancs d'extrémité des oreilles 21 et 22 sont en contact avec une lame ressort d'extrémité 11.1 et 12.1. Les flancs latéraux des oreilles sont en contact avec les lames ressorts latérales 11.2 et 11.3 pour l'oreille 21, et 12.2 et 12.3 pour l'oreille 22. Les différentes lames ressort ont en principe la même forme, Comme cela est représenté de façon schématique en figures 6a et 6b, chaque ensemble oreille/lames ressorts est destiné à être monté dans un logement 41.2, 41.3 d'une chape 41 du système de freinage de façon à être mobile selon une direction perpendiculaire au plan du disque comme cela a été décrit précédemment.

La figure 2b représente une forme générale d'une lame ressort. Là lame ressort 11.1, par exemple, a la forme générale d'un "U" dont une première branche 11.10 est connectée au bord de la plaque 10. Cette première branche du U la lame ressort est sensiblement perpendiculaire au plan de la plaque 10. La deuxième branche 11.11 du "U" est plus longue que la première branche de telle sorte qu'elle possède une zone 11.14 qui dépasse au dessus de la surface de la plaque 10. La branche 11.11 possède une surface 11.12 qui est orientée vers la plaque 10 et qui est destinée à être en contact avec une oreille du support de plaquette de frein. La branche 11.11 possède également une surface extérieure qui est destinée à être placée dans un logement de maintien de la chape du système de freinage..

L'extrémité de la lame ressort est terminée par une languette 11.15 qui est dirigée vers la plaque. 10 de façon à maintenir en place le support de plaquette de frein comme on le verra ultérieurement.

La figure 2b représente une autre forme d'une lame ressort qui permettront un serrage des lames ressorts contre les flancs des oreilles du support de plaquette de freins. De plus, la languette 11.15 a une forme recourbée vers le plan de la plaque 10 ce qui permettra un maintien élastique du support de plaquette de frein tout en réduisant les frottements entre cette languette et le support de plaquette de frein.

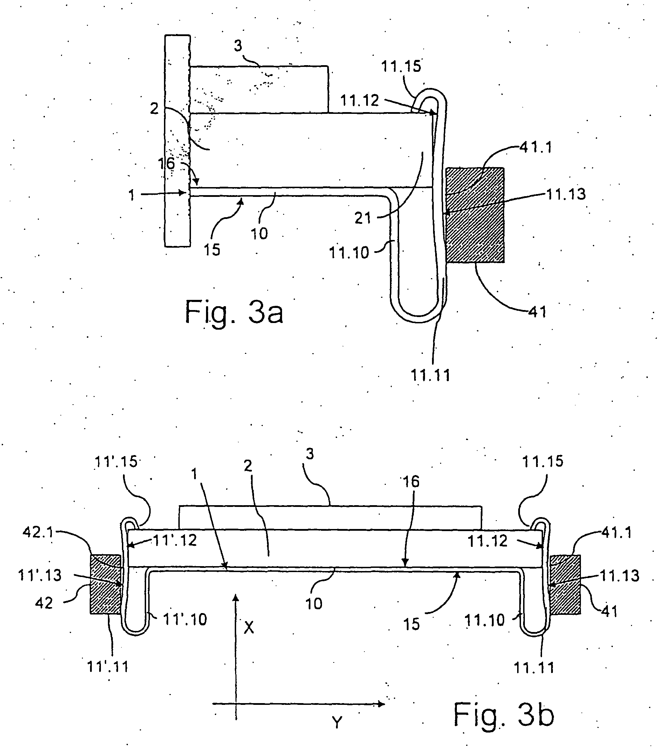

La figure 3a représente le montage d'un support de plaquette de frein 2 sur une lame 1 et le montage de cette lame contre une paroi 41.1 d'un logement de la chape 41 du système de freinage.

Le support de plaquette de frein 2 a sa face principale opposée à celle portant la plaquette de frein appliquée contre la face 16 de la plaque 10. Le flanc d'extrémité de l'oreille 21 du support de plaquette de frein est engagé sous l'extrémité de la languette 11.15, et s'appuie contre la face intérieure 11.12 de la lame ressort 11.11. Par ailleurs l'ensemble plaque support/lames ressorts/support de plaquette de frein est appliqué'contre une paroi 41.1 de la chape 41 du système de freinage.

Comme on peut le voir sur la figure 3a, lorsque ce montage est réalisé, la branche 11.11 présente une surface extérieure 11.13 de forme concave. Le support de plaquette de frein s'appui sur une surface 11.12 qui est connexe ce qui fournit un montage élastique du support de plaquette de frein.

De plus, comme représenté sur la figure 3a, une partie de la surface extérieure 11.13 est susceptible d'être en contact avec la paroi 41.1 de la chape 41

La figure 3a représente la position du support de plaquette de frein avec la garniture de freinage en usure maximale. Dans cette position, la surface de contact entre la surface 11.13 et la paroi 41.1 de la chape n'est pas en vis à vis du support de plaquette de frein.

Sur la vue générale de la figure 3b, on voit donc le montage d'un support de plaquette de frein et de la plaque 10 entre deux parois 41.1 et 42.1 de logements 41 et 42 de la chape. Sur cette figure on voit que l'ensemble plaque 10/support de plaquette de frein 2 peut se déplacer selon la direction X. Ce déplacement est commandé, par exemple, par le piston d'un cylindre de roue (non représenté sur la figure) qui applique des efforts de freinage sur la face 15 de la plaque 10. Par contre les déplacements selon direction Y sans être totalement interdits sont limités et amortis par l'élasticité des branches 11.11 et 11'.11 des lames ressort d'extrémité.

Les deux extrémités de la plaque 10 comportent trois ressorts. Une oreille du support de plaquette de frein est donc placée entre trois ressorts avec ses trois flancs en contact chacun avec une lame ressort.

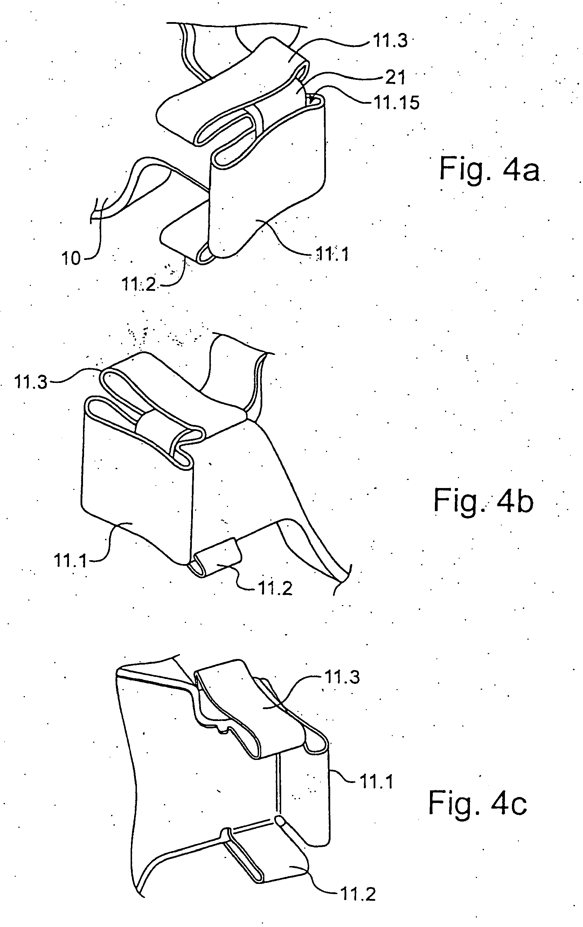

Les figures 4a à 4c représentent différentes vues en perspectives d'un ensemble de ressort avec un support de plaquette de frein monté dans cet ensemble de ressorts.

Comme cela est représenté sur la figure 1, on pourra prévoir un trou 13 dans la plaque 10 permettant le passage d'un élément de fixation 14 du support de plaquette de frein sur la plaque 10. Ce trou pourra avoir une forme allongée pour permettre le passage de.la tête de l'élément de fixation 14. L'élément de fixation relie la plaque 10 au support de plaquette de frein en laissant néanmoins de possibilité à la plaque 10 de bouger selon la direction Y (figure 3b) par rapport au support de plaquette de frein.

Par ailleurs, on prévoira avantageusement de recouvrir la face 15 de la plaque 10 opposée à la face portant le support de plaquette de frein par une couche d'un matériau déformable tel que du caoutchouc. La face 15 est destinée à recevoir les efforts du piston du cylindre de roue ; la couche de matériau déformable permettra ainsi d'amortir la retransmission des éventuelles vibrations des plaquettes dé freins.

On pourra prévoir également de prévoir une couche d'un matériau lubrifiant tel que de la graisse entre la face 16 de la plaque 10 et le support de plaquette de frein

De plus, on prévoira avantageusement de recouvrir les flancs des oreilles des supports de plaquettes de frein par une couche d'un matériau présentant un faible coefficient de frottement tel que de la peinture.

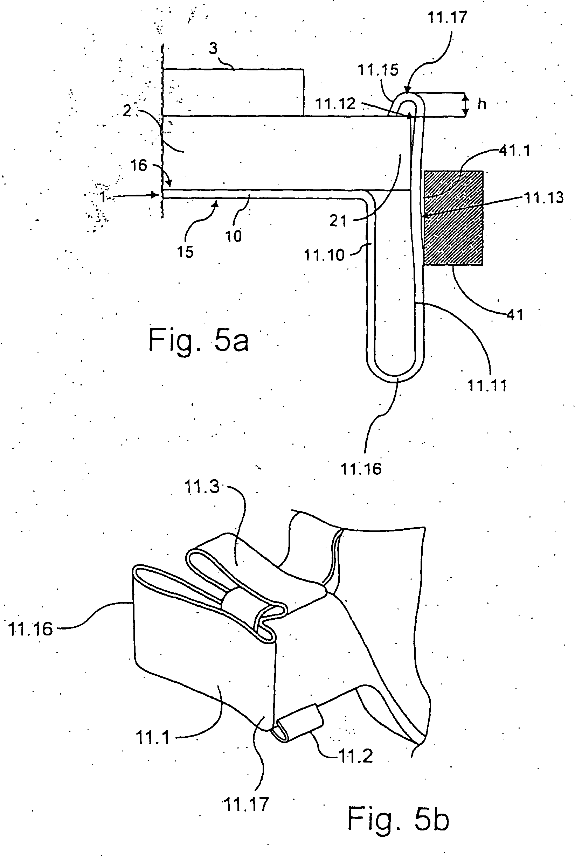

Selon une variante de réalisation de l'invention, on prévoit que l'une des lames ressorts 11.1 à 11.3 ou 12.1 à 12.3 possède une forme de U plus allongée que les autres lames ressorts. Par exemple, sur les figures 5a et 5b, la lame ressort 11.1 est plus longue que les autres. Une telle structure permettra au système de fonctionner en témoin sonore d'usure. En effet, lorsque la garniture de freinage 3 atteindra un stade d'usure avancé, le plan de la plaquette de frein en contact avec le disque de freinage atteindra le niveau de la partie extérieure 11.17 de la languette 11.15. La partie extérieure 11.17 frottera alors contre le disque. Ce frottement engendrera des vibrations qui seront transformées par la lame ressort en ondes sonores. La partie allongée 11.16 du U fonctionnera en diapason et permettra d'amplifier ces ondes sonores.

Dans le cadre de cette variante, on pourra prévoir que la partie extérieure 11.17 de la languette 11.15 soit plus longue que les languettes des autres lames ressort pour que ce soit la languette 11.15 qui entre la première en contact avec le disque de freinage. Bien entendu la hauteur h de la languette 11.15 sera calibrée pour qu'elle entre en contact avec le disque de freinage lorsque la plaquette de frein a atteint un taux d'usure déterminé.

Le système des figures 5a et 5b permet ainsi de faire office de témoin d'usure des plaquettes de frein.

On obtient ainsi un système comportant moins de pièces que les systèmes connus, plus rapide à monter et donc plus économique.

Les figures 6a et 6b représentent un exemple de montage de la plaque 1 munie d'un support de plaquette de frein dans une pièce support 41 (ou chape). Comme on peut le voir particulièrement sur la figure 6a, les ressorts 11.1 à 11.3 d'une extrémité de la plaque 1 enserrent une extrémité du support de plaquette de frein et sont placés dans une cavité 41.2 d'une pièce support 41.

La figure 6b montre l'ensemble du système monté dans la pièce support 41 (chape) avec le support de plaquette de frein 2 enserré entre les ressorts de la plaque 1 dans les cavités 41.2 et 41.3 de la pièce 41.

## Revendications

1. Système de montage pour supports de plaquettes de freins à disques possédant deux extrémités latérales de guidage (21, 22), **caractérisé en ce qu'**il comporte une plaque (10) dont une dimension entre deux extrémités situées selon une direction est sensiblement équivalente à la distance séparant les deux extrémités latérales de guidage d'un support de plaquette (2), ladite plaque (10) étant munie à chacune de ses extrémités d'au moins un premier ressort (11.1, 12.1), ces ressorts étant prévus à la fois pour enserrer lesdites extrémités de guidage et pour être enserrés dans un logement de maintien d'un système de freinage.

2. Système de montage de supports de plaquettes de freins à disques selon la revendication 1, **caractérisé en ce que** ledit premier ressort comporte au moins une lame (11.1) recourbée en forme de "U" dont une première branche (11.10) est plus courte que la deuxième branche (11.11), une extrémité de la première branche (11.10) du "U" étant raccordée à une extrémité (10.1) de la plaque (10), une face intérieure (11.12) de la deuxième branche (11.11) du "U" étant tournée vers la plaque et l'extrémité (11.14) de cette face intérieure étant destinée à être en contact avec un flanc d'une extrémité de guidage d'un support de plaquette (2), une face extérieure (11.13) de la deuxième branche du "U" étant tournée du côté opposé à la plaque et étant destinée à être en contact avec une pièce support (41, 42).

3. Système de montage de supports de plaquettes de freins à disques selon la revendication 2, **caractérisé en ce que** la deuxième branche (11.11) du "U" est incurvée, la face convexe étant la face intérieure (11.12) de cette deuxième branche du "U".

4. Système de montage de supports de plaquettes de freins à disques selon l'une des revendication 2 ou 3, **caractérisé en ce que** l'extrémité (11.14) de la deuxième branche (11.11) comporte une languette (11.15) tournée vers la plaque (1).

5. Système de montage de supports de plaquettes de freins à disques selon l'une des revendications précédentes, **caractérisé en ce qu'**il est destiné au montage d'un support de plaquette de frein dont les extrémités de guidage (21, 22) comportent chacune trois flancs (21.1, 21.2, 21.3) et **en ce que** chaque extrémité (10.1, 10.2) de la plaque comporte un deuxième et un troisième ressorts similaires au premier ressort et dont les extrémités des faces intérieures des deuxièmes branches des "U" sont destinées à être en contact chacune avec un flanc d'une extrémité de guidage (21, 22).

6. Système de montage de supports de plaquettes de freins à disques selon la revendication 6, **caractérisé en ce que** la plaque (1) comporte un trou (13) permettant de fixer la plaque (1) à un support de plaquette de frein (2).

7. Système de montage de supports de plaquettes de freins à disques selon la revendication 6, **caractérisé en ce que** la face (15) opposée à la face destinée à être en contact avec le support de plaquette de frein est revêtue d'une couche d'un matériau amortisseur.

8. Ensemble de montage de support de plaquette de frein appliquant le système de montage selon l'une quelconque des revendications précédentes, **caractérisé en ce qu'**il comporte un support (2) de plaquette de frein comportant deux extrémités de guidage (21, 22) situées à deux de ces extrémités latérales opposées, lesdites extrémités de guidage étant enserrées par lesdits ressorts (11.1 à 11.3 et 12.1 à 12.3).

9. Frein à disque appliquant l'ensemble de montage selon la revendication 8, **caractérisé en ce qu'**il comporte une pièce support (41) comportant deux ouvertures (41.1, 41.2) dont la distance qui les sépare correspond sensiblement à la dimension de la plaque (10) mesurée entre ses deux extrémités, ces deux extrémités étant placées dans ces ouvertures avec la face extérieures, de la deuxième branche de chaque lame en forme de "U" en contact avec les flancs d'un des logements

10. Frein à disque selon la revendication précédente, **caractérisé en ce que** les surfaces de chaque support de plaquette (2) en contact avec une lame en forme de "U" est revêtue d'une couche d'un matériau présentant un faible coefficient de frottement.

11. Frein à disque selon la revendication 9, **caractérisé en ce que** l'une des lames ressorts à une forme de U plus allongée que les autres lames ressorts et **en ce que** la languette (11.15) possède une hauteur h par rapport au support de plaquette de frein telle qu'elle soit destinée à entrer en contact avec le disque de freinage lorsque la plaquette de frein atteint un taux d'usure déterminé.

## Claims

1. System for mounting disc brake pad backplates having two guiding lateral ends (21, 22), **characterized in that** it involves a plate (10) of which a dimension between two ends lying in one direction is substantially equivalent to the distance separating the two lateral guiding ends of a pad backplate (2), the said plate (10) being equipped at each of its ends with at least a first spring (11.1, 12.1), these springs being designed both to clamp the said guiding ends and to be clamped in a braking system retaining housing.

2. System for mounting disc brake pad backplates according to Claim 1, **characterized in that** the said first spring comprises at least one leaf (11.1) bent into the shape of a U of which a first leg (11.10) is shorter than the second leg (11.11), one end of the first leg (11.10) of the U being connected to one end (10.1) of the plate (10), an interior face (11.12) of the second leg (11.11) of the U facing towards the plate and the end (11.14) of this interior face being intended to be in contact with one flank of a guiding end of a pad backplate (2), an exterior face (11.13) of the second leg of the U facing away from the plate and being intended to be in contact with a mount (41, 42).

3. System for mounting disc brake pad backplates according to Claim 2, **characterized in that** the second leg (11.11) of the U is curved, the convex face being the interior face (11.12) of this second leg of the U.

4. System for mounting disc brake pad backplates according to one of Claims 2 and 3, **characterized in that** the end (11.14) of the second leg (11.11) comprises a tongue (11.15) facing towards the plate (1).

5. System for mounting disc brake pad backplates according to one of the preceding claims, **characterized in that** it is intended for mounting a brake pad backplate the guiding ends (21, 22) of which each comprise three flanks (21.1, 21.2, 21.3), and **in that** each end (10.1, 10.2) of the plate comprises a second spring and a third spring which are similar to the first spring and of which the ends of the interior faces of the second legs of the Us are intended each to be in contact with one flank of one guiding end (21, 22).

6. System for mounting disc brake pad backplates according to Claim 6, **characterized in that** the plate (1) has a hole (13) to allow the plate (1) to be attached to a brake pad backplate (2).

7. System for mounting disc brake pad backplates according to Claim 6, **characterized in that** the opposite face (15) to the face intended to be in contact with the brake pad backplate is coated with a layer of a damping material.

8. Assembly for mounting brake pad backplate using the mounting system according to any one of the preceding claims, **characterized in that** it involves a brake pad backplate (2) comprising two guiding ends (21, 22) situated at two of these opposite lateral ends, the said guiding ends being clamped by the said springs (11.1 to 11.3 and 12.1 to 12.3).

9. Disc brake employing the mounting assembly according to Claim 8, **characterized in that** it involves a mount (41) comprising two openings (41.1, 41.2) the distance between which substantially corresponds to the dimension of the plate (10) measured between its two ends, these two ends being placed in these openings with the exterior face of the second leg of each U-shaped leaf in contact with the flanks of one of the housings.

10. Disc brake according to the preceding claim, **characterized in that** the surfaces of each pad backplate (2) in contact with a U-shaped leaf is covered with a layer of a material that has a low coefficient of friction.

11. Disc brake according to Claim 9, **characterized in that** one of the leaf springs has a more elongate U-shape than the other leaf springs and **in that** the tongue (11.15) has a height h with respect to the brake pad backplate that is such that it is intended to come into contact with the brake disc when the brake pad reaches a determined level of wear.

## Patentansprüche

1. System zum Anbringen von Bremsklotzträgern von Scheibenbremsen, die zwei seitliche Führungsenden (21, 22) aufweisen, **dadurch gekennzeichnet, dass** es eine Platte (10) aufweist, deren eine Abmessung zwischen zwei entlang einer Richtung liegenden Enden im Wesentlichen gleich dem Abstand ist, der die beiden seitlichen Führungsenden eines Bremsklotzträgers (2) trennt, wobei die Platte (10) an jedem ihrer Enden mit mindestens einer ersten Feder (11.1, 12.1) versehen ist, wobei diese Feder dazu vorgesehen ist, sowohl um die Führungsenden einzuspannen als auch um in einer Halteaufnahme eines Bremssystems eingespannt zu sein.

2. System zum Anbringen von Bremsklotzträgern von Scheibenbremsen nach Anspruch 1, **dadurch gekennzeichnet, dass** die erste Feder mindestens ein "U"-förmig umgebogenes Blatt (11.1) aufweist, von welchem ein erster Schenkel (11.10) kürzer als der zweite Schenkel (11.11) ist, wobei ein Ende des ersten Schenkels (11.10) des "U" an einem Ende (10.1) der Platte (10) angeschlossen ist, wobei eine Innenfläche (11.12) des zweiten Schenkels (11.11) des "U" der Platte zugewandt ist und das Ende (11.14) dieser Innenfläche dazu vorgesehen ist, mit einer Flanke eines Führungsendes eines Bremsklotzträgers (2) in Kontakt zu stehen, wobei eine Außenfläche (11.13) des zweiten Schenkels des "U" der der Platte entgegengesetzten Seite zugewandt ist und dazu vorgesehen ist, mit einem Trägerteil (41, 42) in Kontakt zu stehen.

3. System zum Anbringen von Bremsklotzträgern von Scheibenbremsen nach Anspruch 2, **dadurch gekennzeichnet, dass** der zweite Schenkel (11.11) des "U" gebogen ist, wobei die konvexe Fläche die Innenfläche (11.12) dieses zweiten Schenkels des "U" ist.

4. System zum Anbringen von Bremsklotzträgern von Scheibenbremsen nach einem der Ansprüche 2 oder 3, **dadurch gekennzeichnet, dass** das Ende (11.14) des zweiten Schenkels (11.11) eine der Platte (1) zugewandte Lasche (11.15) aufweist.

5. System zum Anbringen von Bremsklotzträgern von Scheibenbremsen nach einem der vorhergehenden Ansprüche, **dadurch gekennzeichnet, dass** es zum Anbringen eines Bremsklotzträgers bestimmt ist, dessen Führungsenden (21, 22) jeweils drei Flanken (21.1, 21.2, 21.3) aufweisen, und dass jedes Ende (10.1, 10.2) der Platte eine der ersten Feder ähnliche zweite und dritte Feder aufweist, von denen die Enden der Innenflächen der zweiten Schenkel des "U" dazu bestimmt sind, jeweils mit einer Flanke eines Führungsendes (21, 22) in Kontakt zu stehen.

6. System zum Anbringen von Bremsklotzträgern von Scheibenbremsen nach Anspruch 5, **dadurch gekennzeichnet, dass** die Platte (1) ein Loch (13) aufweist, das die Befestigung der Platte (1) an einem Bremsklotzträger (2) ermöglicht.

7. System zum Anbringen von Bremsklotzträgern von Scheibenbremsen nach Anspruch 6, **dadurch gekennzeichnet, dass** die Fläche (15), die gegenüber der Fläche liegt, die dazu bestimmt ist, mit dem Bremsklotzträger in Kontakt zu stehen, mit einer Schicht eines Dämpfungsmittels überzogen ist.

8. Baugruppe zum Anbringen von Bremsklotzträgern von Scheibenbremsen, welche das Anbringungssystem nach einem der vorhergehenden Ansprüche, **dadurch gekennzeichnet, dass** sie einen Bremsklotzträger (2) aufweist, der zwei Führungsenden (21, 22) aufweist, die an zwei seiner gegenüberliegenden seitlichen Enden angeordnet sind, wobei die Führungsenden von den Federn (11.1 bis 11.3 und 12.1 bis 12.3) eingespannt sind.

9. Scheibenbremse, die die Anbringungsbaugruppe nach Anspruch 8 anwendet, **dadurch gekennzeichnet, dass** sie einen Trägerteil (41) mit zwei Öffnungen (41.1, 41.2) aufweist, dessen diese trennender Abstand im Wesentlichen der Abmessung der Platte (10) entspricht, die zwischen ihren beiden Enden gemessen ist, wobei diese beiden Enden so in diesen Öffnungen eingesetzt sind, dass die Außenfläche des zweiten Schenkels jedes "U"-förmigen Blatts mit den Flanken einer der Aufnahmen in Kontakt steht.

10. Scheibenbremse nach dem vorhergehenden Anspruch, **dadurch gekennzeichnet, dass** die Fläche jedes Bremsklotzträgers (2), die mit einem "U"-förmigen Blatt steht, mit einer Schicht aus einem Material überzogen ist, das einen geringen Reibungskoeffizient aufweist.

11. Scheibenbremse nach Anspruch 9, **dadurch gekennzeichnet, dass** eine der Blattfeder eine U-Form aufweist, die länger als die anderen Blattfeder ist, und dass die Lasche (11.15) gegenüber dem Bremsklotzträger eine solche Höhe h besitzt, dass sie dazu bestimmt ist, mit der Bremsscheibe in Kontakt zu gelangen, wenn der Bremsklotz einen bestimmten Abnutzungswert erreicht hat.
